# EUROPEAN PATENT APPLICATION

(11) **EP 4 113 943 A1**
(43) Date of publication of application: **04.01.2023**
(21) Application number: 22181389.2
(22) Date of filing: 27.06.2022
(51) Int. Cl.: H04L 41/50, H04L 47/80, H04L 67/50, H04W 8/18

(54) **SYSTEM AND METHOD FOR SUBSCRIBER AWARENESS IN A 5G NETWORK**

(30) Priority: 30.06.2021 IN 202111029507
(71) Applicant: Sandvine Corporation, Waterloo, Ontario N2L 3V3 (CA)
(72) Inventor: Kulshrestha, Vishal, 560076 Bengaluru (IN); Ravishankar, Kavitha, 560103 Bengaluru (IN); Mittal, Ambuj, 560103 Bengaluru (IN); Dwivedi, Neelesh, 560017 Bangalore (IN); Osman, Alexander, Springs 11, Dubai (AE); Tascon, Manuel Jesus Rebellon, Waterloo, Ontario N2V 2M2 (CA); Siddalingaiah, Gangaraju K., 560114 Bengaluru (IN)
(74) Representative: Ipey

(57) **Abstract**

A method and system for subscriber awareness for traffic flows in a computer network. The system including: a Subscriber Awareness Control Plane (SACP) module configured to register as a network node and subscribe to at least one network function on the network; at least one processing module configured to request and receive information of traffic flow parameters and subscriber parameters for the traffic flows from the at least one network function; and a subscriber awareness module configured to map subscribers to traffic flows, based on the received traffic flow parameters and subscriber parameters. The method including: registering an SACP module as a network node; subscribing to at least one network functions; receiving information of traffic flow parameters and subscriber parameters for the traffic flows; and mapping subscribers to traffic flows, based on the traffic flow parameters and subscriber parameters.

## Description

### RELATED APPLICATION

The present claims the benefit on India Provisional Application No. 202111029507 filed June 30, 2021, which is hereby incorporated in its entirety.

### FIELD

The present disclosure relates generally to computer networks. More particularly, the present disclosure relates to a system and method for subscriber awareness in a 5G network.

### BACKGROUND

Network traffic continues to increase all over the world. Network operators continue to upgrade and improve their networks in order to continue to meet demand. As network operators move to newer network equipment, they are beginning to incorporate more 5G networks in an aim to meet customer demand. Network operators continue to look for ways to ensure that the network is providing the appropriate service to the subscribers. In some cases, where network operators are using 5G networks, the network operator may wish to vary services or report usage based on subscriber attributes. For example, greater priority and bandwidth may be provided to higher paying subscribers, congestion management may be performed based on subscriber location, usage may be reported on a per subscriber basis, and the like.

Conventional 5G networks may lack the ability to provide subscriber mapping, for example it may be difficult to determine or map subscribers, subscriber attributes and information about traffic flows to 3rd party products. The generally ability to know which subscriber is using the network and its resources and the data that allows for this information to be determined is often called "subscriber awareness". It is, therefore, desirable to provide an improved method and system for subscriber awareness on a 5G network.

The above information is presented as general background information only to assist with an understanding of the present disclosure. No determination has been made, and no assertion is made, as to whether any of the above might be applicable as prior art with regard to the present disclosure.

### SUMMARY

In a first aspect, there is provided a system for subscriber awareness for traffic flows in a computer network, the system including: a Subscriber Awareness Control Plane (SACP) module configured to register as a network node and subscribe to at least one network function on the network; at least one processing module configured to request and receive information of traffic flow parameters and subscriber parameters for the traffic flows from the at least one network function; and a subscriber awareness module configured to map subscribers to traffic flows, based on the received traffic flow parameters and subscriber parameters.

In some cases, the SACP module may be further configured to provide traffic management actions based on the mapped subscriber to the traffic flow.

In some cases, traffic management actions may include instructions to another network node to implement the traffic action.

In some cases, the SACP module may include an AMF Event Subscription and Processing module configured to determine all network subscriber location updates.

In some cases, the AMF event subscription and processing module may be further configured to determine location updates for active subscribers.

In some cases, the SACP module may include a UDM event subscription and Query Processing module configured to determine updates related to the subscriber parameters.

In some cases, the SACP module may include a Radius Subscriber mapping module configured to retrieve Radius mapping events associated with the subscriber on the network.

In some cases, the SACP module may include an NRF registration and topology module configured to configured to discover at least one other network function in the network and track the interactions of the at least one other network function with the subscriber's traffic flows.

In some cases, the SACP module may further include an SMF event subscription and processing module configured to receive events on session creates, session updates and deleted sessions related to the subscriber and for processing these received events to determine any changes to the subscriber mapping.

In another aspect, there is provided a method for subscriber awareness for traffic flows in a computer network, the method including: registering a Subscriber Awareness Control Plane (SACP) module as a network node; subscribing to at least one network functions on the network monitoring traffic flows; receiving information of traffic flow parameters and subscriber parameters for the traffic flows from at least one network function; and mapping subscribers to traffic flows, based on the traffic flow parameters and subscriber parameters.

In some cases, the method may further include providing traffic management actions based on the mapped subscriber to the traffic flow.

In some cases, the traffic management action may include instructions to another network node to implement the traffic action.

In some cases, the method may further include determining all network subscriber location updates.

In some cases, the method may further include determining location updates for active subscribers.

In some cases, the method may further include determining updates related to the subscriber parameters.

In some cases, the method may further include retrieving Radius mapping events associated with the subscriber on the network.

In some cases, the method may further include: discovering at least one other network function in the network; and tracking the interactions of the at least one other network function with the subscriber's traffic flows.

In some cases, the method may further include: receiving events on session creates, session updates and deleted sessions related to the subscriber; and processing these received events to determine any changes to the subscriber mapping.

Other aspects and features of the present disclosure will become apparent to those ordinarily skilled in the art upon review of the following description of specific embodiments in conjunction with the accompanying figures.

### BRIEF DESCRIPTION OF FIGURES;

Embodiments of the present disclosure will now be described, by way of example only, with reference to the attached Figures.
Fig. 1 illustrates a conventional 5G of a computer network;
Fig. 2 illustrates an architecture of a computer network with a system for subscriber awareness according to an embodiment;
Fig. 3 illustrates an architecture of a computer network with a system for subscriber awareness according to another embodiment;
Fig. 4 illustrates an architecture of a computer network with a system for subscriber awareness according to still another embodiment;
Fig. 5 illustrates a system for subscriber awareness according to an embodiment;
Figs. 6 and 7 illustrate a message sequence diagram according to an embodiment of a method for subscriber awareness;
Fig. 8 illustrates a specific example for registration of the system with an NRF node;
Fig. 9 is a table illustrating various attributes when registering with the NRF node in the example in Fig. 8;
Fig. 10 illustrates a specific example of receiving a Network Function Heart beat;
Fig, 11 illustrates a specific example of a Network Function Status subscription request;
Fig. 12 is a table illustrating various attributes associated with the Network Function status subscription request;
Fig. 13 illustrates a specific example of Network Function discovery;
Fig. 14 illustrates a specific example of Network Function notifications;
Fig. 15 illustrates a specific example of the system requesting Access Tokens;
Fig. 16 illustrates a specific example of SMF Event Subscription;
Fig. 17 is a table illustrating various fields for SMF Event Subscription;
Fig. 18 illustrates a specific example of SMF mapping;
Fig. 19 illustrates a specific example of receiving AMF details;
Fig. 20 illustrates a specific example of AMF subscription and query;
Fig. 21 illustrates a specific example of AMF notifications;
Fig. 22 illustrates a specific example of BSF Lookup; and
Figs. 23 to 26 illustrate specific examples of UDM requests by the system.

### DETAILED DESCRIPTION

Generally, the present disclosure provides a method and system for subscriber awareness for 5G networks. Embodiments of the system and method are configured to register as a network node, for example a Network Exposure Function or an Application Function with the network. Embodiments of the system and method are then intended to subscribe to various network functions in order to request and receive information of traffic flow parameters and subscriber parameters for the traffic flows. Embodiments of the system and method may then map subscribers to traffic flows. In some cases, embodiments of the system and method may provide traffic management actions based on the mapped subscriber to the traffic flow. In other cases, the system and method may provide instructions for another network node to provide traffic management actions.

Subscriber Awareness is an enrichment feature for the functionality that Deep Packet Inspection (DPI) has conventionally been able to provide. Purely for the purpose of DPI, subscriber information may not be needed. However, the value of DPI products in practice is to take action and/or analyze data based on Subscriber information like Subscriber or service Plan, Location, or the like. As an example of a solution that may have previously been implemented by DPI is that a network operator providing more priority and bandwidth to gold tier subscribers. Further, network operators may be able to provide congestion management on a per location basis and may enhance the user experience by providing application aware congestion management that will ensure that traffic shaping is first applied to applications that are not throughput and/or latency sensitive. Network operators may further use subscriber awareness for usage counting on a per subscriber basis.

Embodiments of the system and method may benefit from Applicant Recognition (AR) is now used in addition to or instead of DPI as more of the traffic is encrypted. With the encryption, it may not be possible to find out what is inside the packet. Applications may be recognized using, for example, Machine Learning Modules that may recognize traffic patterns and/or gaps, or the like with inputs from example, Domain Name Server (DNS), Internet Protocol (IP) addresses, and the like.

For 4G computer networks, conventional solutions commonly rely on a copy of (GPRS Tunneling Protocol) GTPC or Radius packets being sent to the network control plane node Policy Engine (PE). In the 4G core network, GTPC packets are exchanged between Mobility Management Entity (MME) and Serving Gateway (SGW), S11, or between SGW and Packet Gateway (PGW), S5/S8. The Radius packets are between PGW and Radius server. Since these packets are not destined to be sent to the PE, typical solutions provide for a copy of packets to be sent, for example, by mirroring a port on the network switch / router that is carrying these packets. Once the PE gets a copy of these packets, it can extract information about Subscribers like IMSI, Session IP address, Location, and the like.

In a 5G core network, typically the deployment consists of encrypted packets between the control plane nodes. Decrypting these packets, which may be possible with operator and product support is not trivial. In particular, the Transport Layer Security (TLS) 3 protocol used is meant to prevent hackers snooping the traffic to be able to decode it. Therefore, solutions used traditionally for 4G using packet snooping (such as sending copy of packets to PE) may no longer be successful.

Embodiments of the system and method detailed herein are intended to provide for subscriber awareness and its use in DPI (deep packet inspection) function in a 5G network. Embodiments of the system and method are intended to determine various parameters, for example, Subscriber ID, IP Address, location, Network slice (Slice instance identifier- combination of SST (slice service type) and Sd (Slice differentiator)), Access & Mobility Management Function (AMF) handling subscriber's Protocol Data Unit (PDU) session, Radio Access Technology (RAT) Type, New Radio (NR) Cell identifier, gNodeB details, Session and Subscriber Aggregate Maximum Bit Rate (AMBR) values, device identity (Permanent Equipment Identifier (PEI)), and other attributes associated with subscriber's session. This subscriber awareness is intended to be generic and can be used for any client (or network operator) who wishes to get this information.

Embodiments of the system and method disclosed herein are intended to provide similar or equivalent functionality of an international mobile subscriber identity (IMSI) catcher in a 4G network and would be called a Subscription Permanent Identifier (SUPI) catcher in 5G, since the subscriber ID in 5G is referred to as a SUPI. Embodiments of the system and method are intended to provide these attributes to a Deep Packet Inspection module using a proposed Subscriber Awareness Control Plane (SACP) method.

For the purpose of this disclosure, some general definitions are as follows:
i. *Subscriber Awareness:* Is referred to as the ability to be able to determine and store the mapping between subscriber and network resources used, for example, Subscriber ID (SUPI / Generic Public Subscription Identifier (GPSI)) and subscriber resources/attributes like number of sessions, IP address of each session, location of subscriber, Slice ID, and the like.
ii. *Location Awareness:* Is referred to as the ability to be able to determine the location at tracking area, cell, GPS coordinates, or any other attribute that can determine location of a subscriber in a geographically bounded area.
iii. *Subscriber Mapping:* Is a process to find the Subscriber ID using attributes of the subscriber's traffic seen on data plane DPI, for example, IP Address, MAC address, MPLS Label, or the like. Note: subscriber awareness and subscriber mapping are sometimes used interchangeably as subscriber mapping is an element that leads to subscriber awareness

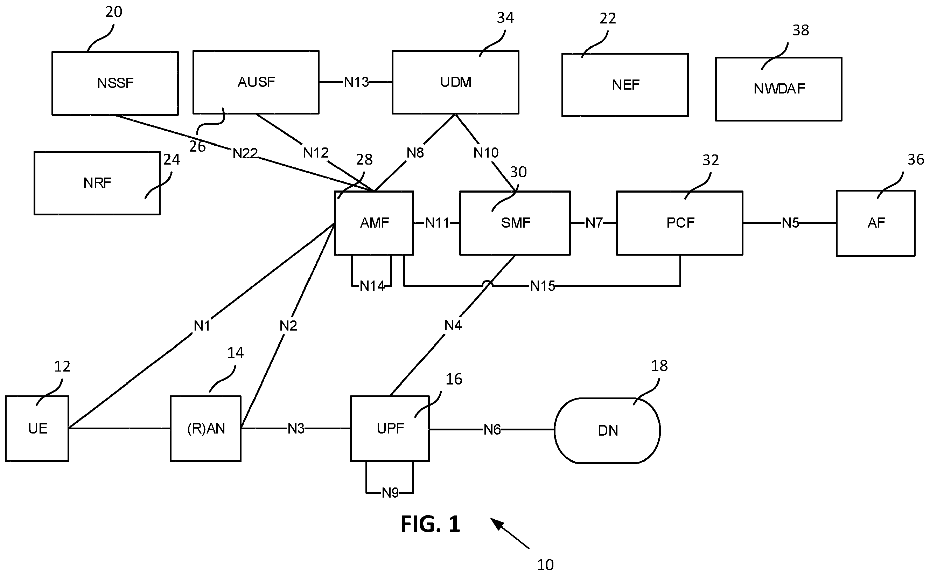

Computer networks, including 5G networks, generally aim to support a subscriber's desire to deliver a rich variety of high throughput (Enhanced Mobile Broadband (eMBB)), highly reliable (URLLC), and low latency services. Figure 1 shows a 5G Service Based Architecture of a computer network 10. Subscribers, via user equipment 12, such as vehicles, mobile phones, tablets, and the like, often connect to a Radio Access Network (RAN) 14. The RAN is connected to a User Plane Function (UPF) 16, which then connects to the Data Network (DN) 18. It will be understood that a 5G network may further include at least one Network Slice Selection Function (NSSF) 20, a Network Exposure Function (NEF) 22, a Network Repository Function (NRF) 24, Authentication Server Function (AUSF) 26, Access and Mobility Management Function (AMF) 28, Sessions Management Function (SMF) 30, Policy and Control Function (PCF) 32, Unified data management (UDM) 34, Application Function (AF) 36 and network data analytics function (NWDAF) 38.

The UPF 16 is the network function responsible for the data-plane processing in the 5G core network. The SMF 30 is responsible for session management. Essentially when a UE 12 (for example, a mobile phone, or other networked device) wishes to initiate a data transfer, the UE is expected to create a session with the SMF and the SMF is intended to provide for an IP address. The allocated IP address can be used for data transfer. This association is called a session or a PDU Session. The session is created for a Data Network Name (DNN), which is equivalent of a 4G APN. SMF 30 has a Subscription Permanent Identifier (SUPI) to IP address mapping available.

AMF 28 is configured to access and manage the mobility of the UE 12. The AMF 28 is configured to be aware of the location of the UE 12 and provide this location to other network devices. A subscriber is identified by an associated SUPI. The subscriber information resides in the Unified Data Repository (UDR), which includes parameters related to the associated session as well.

NEF 22 is configured to allow the exposure of events to a service consumer. The NEF 22, NWDAF 38 and NRF 24 are configured to interact with many other functions and therefore the connections are not shown in figure 1.

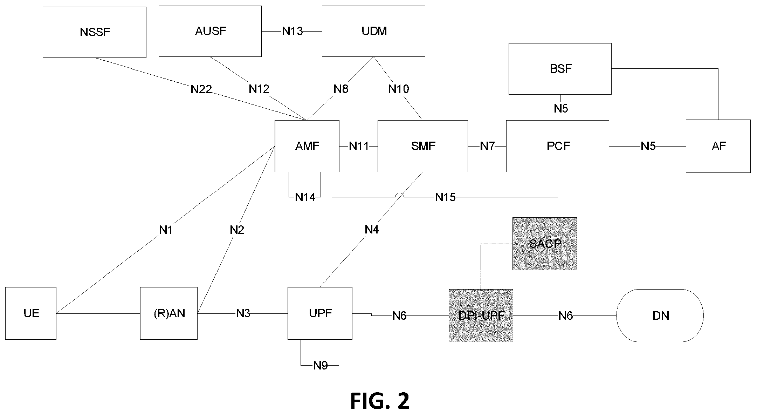

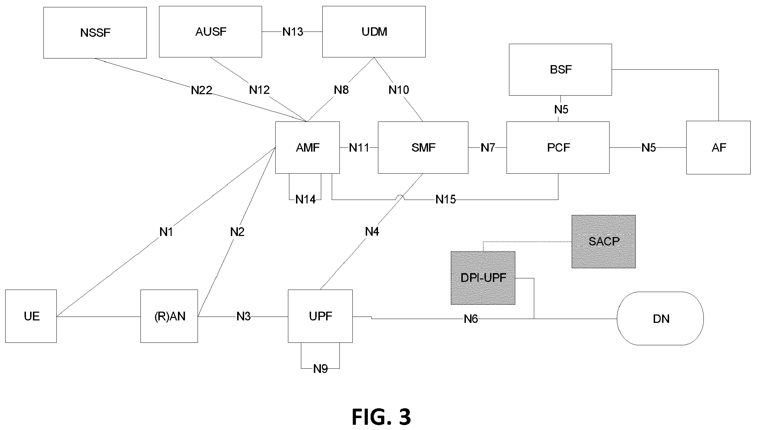

Embodiments of the system and method are intended to include a SACP (Subscriber Awareness Control Plane) function, which is responsible for providing subscriber mapping information to its service consumers. In a particular example, a DPI-UPF, sometimes referred to as an AR-UPF, may be used. In this example, as shown in Figures 2 and 3, a DPI node can be deployed as a custom UPF 16 in a 5G network. The SACP functionality in the system may be achieved with connectivity as an NEF product. Embodiments of the system and method are intended to use SACP to use the NEF network function messages to interact with 5G core network. Therefore, the SACP is intended to act and register as a custom NEF. The SACP associated with the system may be considered to be a 5G equivalent to a PE (Policy Engine) that was used for 4G subscriber awareness.

There may be various manners in which the system for subscriber mapping may be deployed in a 5G network depending on where DPI-UPF is located.

In a specific example, the system, including the DPI-UPF may be included inline on N6 interface. In this example, as shown in figure 2, traffic flows from UPF to DN via the DPI-UPF. The DPI-UPF is configured to apply both analytics on the traffic (via a DPI module) and policy enforcement on the traffic flows (via, for example, a traffic action module which is configured to shape traffic by dropping packets, or by modifying protocol parameters in the packet).

In a further example, the system may include the DPI-UPF offline on N6 interface. In this example, as shown in figure 3, traffic flows from UPF to DN directly but a copy of the traffic may also be sent to DPI-UPF. The DPI-UPF can analyze the traffic but may not do policy enforcement directly on the flows.

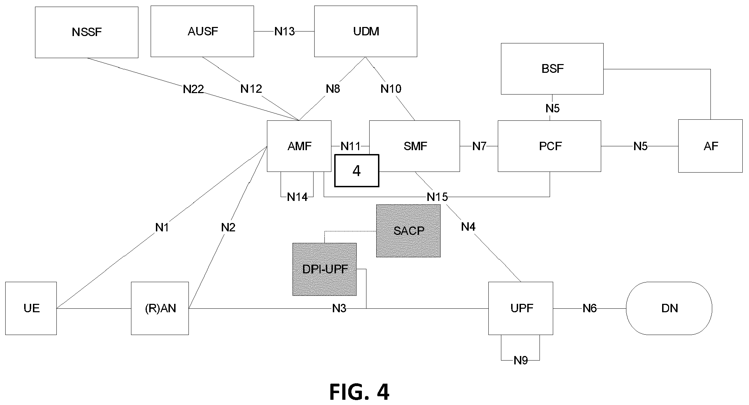

In still another further example, the system may include the DPI-UPF offline on N3 interface. In this example, as shown in figure 4, traffic flows from RAN to UPF directly but a copy of the traffic may also be sent to DPI-UPF. The DPI-UPF can provide analytics using DPI but may not provide for policy enforcement directly on the flows. On N6, DPI-UPF may also see the GTP information, which is not available on N3.

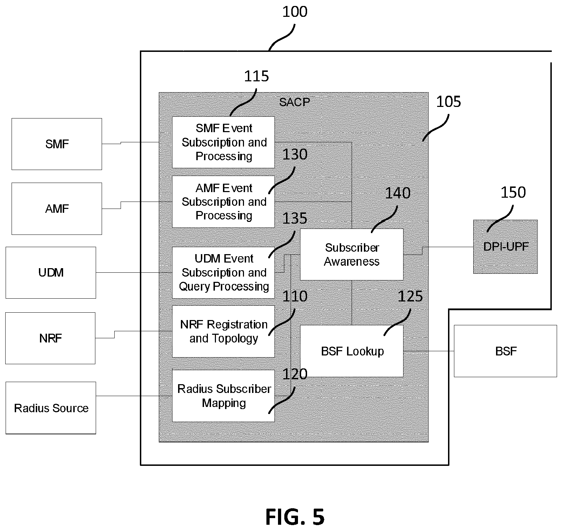

Figure 5 illustrates an embodiment for a system 100 for subscriber awareness/subscriber mapping according to an embodiment. In an example, subscriber mapping parameters (for example, subscriber ID, IP Address(es) of the session, and the like) are provided by Radius or SMF or both depending on operators' deployment configuration. UDM/UDR may be configured to provide other Subscriber profile parameters, or the system may be configured to retrieve this information. For a specific case where a DPI-UPF 150 determines an IP Address for which SUPI (5G Subscriber ID) is not known, a Binding Support Function (BSF) is used to lookup Subscriber ID given the IP Address for the subscriber. The location of the UE and subscriber may be provided by the AMF.

Embodiments of the system and method are intended to be functional regardless of whether TLS is turned on or not in the network. As Subscriber Awareness Control Plane (SACP) registers as standard defined network function (NF) in the network and therefore can use the messaging and features that are provided by the 5G protocol and architecture specifications (for example, within the 3rd Generation Partnership Project (3GPP) 5G Technical Specification).

The system 100 is intended to include a Subscriber Awareness Control Plane (SACP) module 105. The SACP module is configured to process registration, subscription to events and processing of events so as to determine the sessions and attributes of a subscriber. The SACP module may include the following sub-modules: NRF Registration and Topology Module 110, SMF Event Subscription and Processing Module 115, Radius Subscriber mapping Module 120, BSF Lookup Module 125, AMF Event Subscription and Processing Module 130, UDM Event Subscription and Processing Module 135 and a Subscriber awareness module 140.

Embodiments of the system are generally intended to reside on the core network but may be distributed and may be in-line with the traffic flow or may be offline and receive data from another network device. The modules, including a processor and memory component, are in communication with each other but may be distributed over various network devices or may be housed within a single network device. The processor may be configured to retrieve stored instruction from the memory and execute the instructions that provide for the functionality of the modules. The system 100 is intended to receive information from the computer network equipment that allows the system to determine traffic flow metrics, including deep packet inspection data such as application type, subscriber parameters and the like.

The NRF Registration and Topology module 110 is configured to determine and track registering SACP as NEF (to expose the details to AF) with the NRF. The NRF Registration and Topology module may further be configured to discover other NF's (network functions) in the network. A registration with NRF is generally done as the NF is deployed. It is also used if SMF/AMF/UDM/BSF interactions are used by the system 100. If operator deployment does not have NRF, then SACP may be configured with the details of SMF/AMF/UDM/BSF. In some cases, the NRF Registration and Topology module 110 is configured to track the interactions of the other NFs with the subscriber's traffic flows.

The SMF Event Subscription and Processing module 115 is configured to be used for Subscribing to SMF for retrieiving events on session creates/update/delete and for processing these received events. These events may primarily contain SUPI (subscriber ID) and IP Address(es) for the subscriber session during creation. This module may also be used to determine the slice ID of a session by having a separate subscription for each slice ID in the network as described herein.

The Radius Subscriber mapping module 120 is configured to receive or retrieve Radius mapping events from the SMF or by mirroring traffic on the link between SMF and Radius server. This option is available if Radius mapping is used in the network. If Radius mapping is not used, then mapping information can be obtained from the SMF as detailed herein. Radius messages provide subscriber id (SUPI) and IP Address(es) associated with subscriber's session. Usage of Radius in a 5G network is vendor / operator specific, and in some cases, this module may be optional if Radius messaging is not used.

The BSF Lookup module 125 is used to lookup specific information from the BSF. This module may be used for the following two cases:
i. Lookup SUPI for a given IP address. This is typically used when the DPI-UPF module sees traffic for an IP Address for which it does not have SUPI available.
ii. Lookup the slice ID corresponding to a given session.

The AMF Event Subscription and Processing module 130 is configured to be used to subscriber to location update events in following two cases: Per subscriber and Any subscriber.

Depending on the operator desires or requirements to track locations, either of these cases can be used. Usually, as DPI and Subscriber Awareness may be required when active data transfer takes place, per subscriber may be more optimal from an AMF load point of view. If location changes of all subscribers is subscribed for, this results in additional messaging and load on the AMF as even subscribers without active radio session for data transfer are reported (for example, idle mode mobility). Tracking location changes for Idle subscribers may be useful for other cases and analytics but may not be useful for enforcement or analyzing data traffic.

The UDM Event Subscription and Processing module 135 is configured to query the UDM or for subscribing to changes. Typically, this provides additional parameters associated with the subscriber, for example, Subscriber Plan, Session AMBR, Subscriber AMBR, Core network type change events, roaming events, 5G QoS Profile, RAT Type and the like.

A method for subscriber awareness/subscriber mapping is detailed herein. The system may register with the NRF, and handle topology. Registration with NRF is based on whether the network operator has deployed an NRF or not. It is possible to use configuration on the network functions if the NRF is not deployed to provide relevant information for discovery and communication. The NRF may also act as an authorization server for the services exposed by the network function in 5G core. The SACP may interact with the NRF to get the access tokens to use the 5G service APIs exposed by SMF/AMF/UDM/BSF.

When registering to the NRF, if the SMF/AMF/UDM interfaces are enabled, then registration as NEF may also be done required. Further, if BSF is used or desired to be queried in a deployment model, then registration as either NEF or AF is generally required. For both of these situation, two different endpoints may need to be registered.

Since NEF can be used more generically in all cases above, SACP may also registers as an NEF, and registering as an AF is an additional configuration option. Topology updates can happen periodically and be received or retrieved from the NRF. Any updates that are received may be processed accordingly by the system. The SACP may also be notified on topology changes for example, whenever an SMF/AMF/UDM/BSF is added, deleted, updated in the PLMN or the like. Once an NRF detects that topology has changed, the NRF will notify all those who had registered for the updates, including the SACP of the system detailed herein.

If mapping using SMF event interface is needed, then the system may subscribe to SMF. The subscription may be done for every DNN in the network for which mapping information is desired. The list of DNNs may be configured by the operator for the system.

The system may further register with the AMF for location changes. This may be used by the system if the location changes are to be notified to SACP for all subscribers. Typically, all subscriber updates may not be used as it will provide updates for idle subscribers as well.

The system may further provide mapping information, attributes and/or parameters. On receiving or retrieving mapping information (for example, SUPI to IP Address association) from an SMF or Radius source, or from BSF Query module, the system may store this information, for example in a memory component, for providing to service consumers (via, for example, the DPI-UPF module).

If per subscriber location events are requested by the system or operator, then the system may subscribe to AMF for location change events. Since these updates may be desirable only for active subscribers, in this case, subscription to AMF for location change will be done only when SMF informs about a session creation. An active subscriber may be considered to be a subscriber having a PDU Session and the UE is not in the Idle state in the AMF. When all sessions are released for a subscriber, then the AMF subscription may also be cancelled for the subscriber. The current value of location is queried by the system from the AMF. A subscriber typically has a mobile device, and it is the mobile device that moves. If the subscriber moves from one cell or gNB to another cell or gNB, all sessions are considered to have moved. All data transfer will take place on the new location of the subscriber.

If any parameters from UDM are used by the system, the UDM may be queried, and information obtained and/or stored. This information may be collected together and sent to service consumer (DPI-UPF module). It is also possible to send this information as and when it is received by the system. Further, if any updates are received from SMF/AMF/UDM, these updates may also be sent to the DPI-UPF module. If the SMF/Radius indicate that a session is released, then associated subscriptions, if any, towards AMF/UDM may be released and a release indication may be provided to DPI-UPF module.

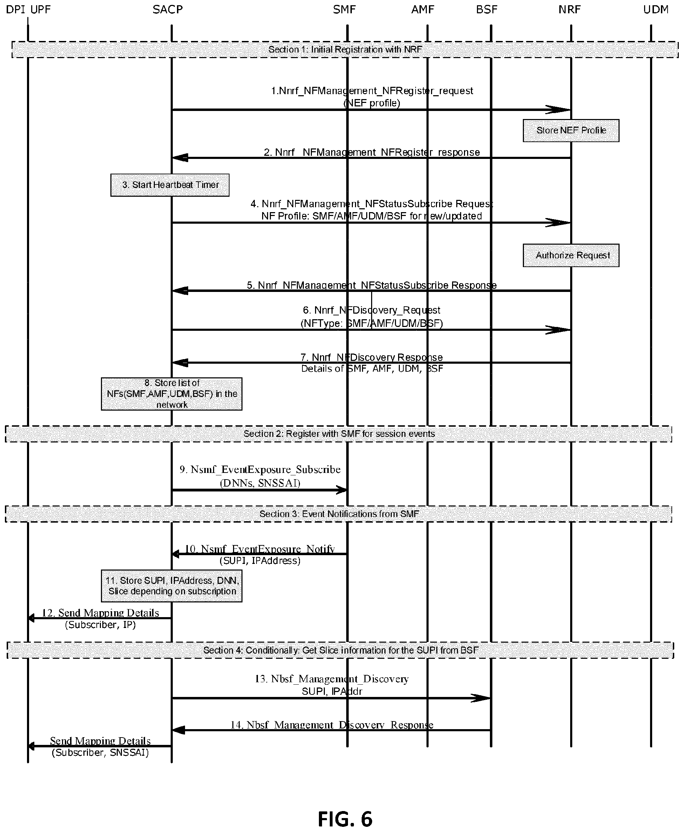

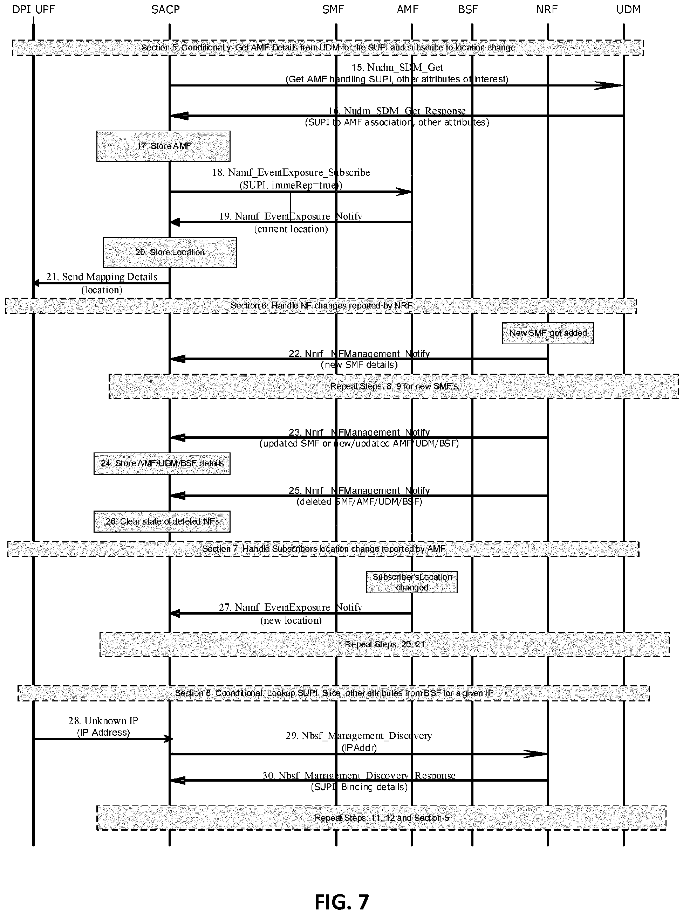

Figures 6 and 7 illustrates a message sequence chart of a typical sequence of a 5G mapping system.

Registration may be used if deployment model uses NRF and any of SMF, AMF, UDM or BSF modules are in use. In particular, SACP module may register as an NEF. A plurality of NEF's is allowed in the 5G network and therefore SACP module can register as an NEF. In some cases, the SACP module may also register as an AF. If network deployment is configured to allow a custom NF to communicate with other NFs, then the SACP module can be registered as a custom NF that is not defined as a standard NF based on operator defined configuration.

If SMF, AMF, UDM interactions are used, registration as NEF may be done by the SACP module. If BSF interactions are used, then registration as either NEF or AF may be done, depending on the system configuration and network operator's setup. If registering as both NEF and AF, the SACP module may expose two different endpoints (IP Address, port) one for NEF, other for AF and may register both of these in NRF.

If NRF is not deployed in the network, the SACP module may register and details about communicating with SMF, AMF, UDM, BSF (HTTP REST endpoint: IP Address, Port) are configured in the SACP module.

As illustrated in figures 6 and 7, the following interactions may be performed by the SACPmodule. The first section provides a method for Initial registration with the NRF.

Message 1 (Nnrf_NFManagement_NFRegister_request) may be used to register the system, and in particular the SACP module as an NEF in the NRF and this message contains the NEF profile (HTTP service endpoint exposed by SACP and other parameters as detailed herein). A similar message can be used for registering the system as an AF if that is desirable by the operator. It will be understood that the system may register as either and/or both an NEF or AF depending on the network environment.

Message 2 (Nnrf_ NFManagement_NFRegister_response) is an intended response to Message 1 indicating success or failure. A heartbeat timer is received which may be used to refresh the registration on timer expiry by
Nnrf_NFManagement_NFUpdate from the SACP module to the NRF as detailed herein. The NFUpdate is not shown in figures 6 or 7 but would be understood.

Once registered, the system, and in particular the SACP module, may send messages to discover NF's that it would be beneficial to be associated with the receive subscriber data.

Message 4 (Nnrf_NFManagement_NFStatusSubscribe Request) is intended to be sent by the SACP module to the NRF to discover any topology changes that may happen at a future point in time for the networks SMF's BSF's UDMs and AMFs. It will be understood that in any given embodiment of the system and method, the system may not register to all of the above noted network functions, but only a subset of them depending on the desired information by the network operator and the subscriber policies that may be associate with the traffic flow.

Message 5 (Nnrf_NFManagement_NFStatusSubscribe Response) informs success / failure with respect to Message 4 of figure 6.

Message 6 (Nnrf_NFDiscovery_Request Request) is sent by the SACP module to the NRF to discover at least one current SMF's BSF's UDMs and/or AMFs.

Message 7 (Nnrf_NFDiscovery_Response) is configured to provide the details of the requested NF's: for example, the Endpoint address to reach the NFs and other properties such as, Range of SUPI's, Slices, DNN's and the like, handled by the NF. The system is configured to store the NF profiles received for further communication.

Section 2 of Figure 6 provides for the subscription or registration to SMF Events by the system. For each SMF in the network, the system is configured to register for events exposed by the SMF Event Service. The SACP subscribes to SMF for each DNN and Slice (SNSSAI) for the PDU session (establishment, release, UE ip changes) related events. In particular, message 9 of figure 6, (Nsmf_EventExposure_Subscribe) which may be sent with parameters such as, DNN and SNSSAI, is sent by the SACP module to the NRF and SMF to register to SMF. The system is intended to register in order for creation / update / deletion of PDU Session to be reported to the system. The event is subscribed for "anyUE" meaning that the SMF will report an event for any of the sessions of any subscribers and is configured to includes a correlation ID generated by the SACP module. If Slice information is desired and the operator does not want to use BSF for the slice data, then this registration is done per slice so that events can be correlated with registration using the correlation id to find the associated slice.

Event Notifications from SMF as shown in section 3 of Figure 6, is intended to occur once the system is subscribed with the SMF. The SMF event service will start sending events about session creation / update / delete to the system. Message 10 (Nsmf_EventExposure_Notify): is sent on Create/Update/Delete of a session. On receiving the create, the SACP stores the parameters (SUPI, IP) and provides them to the system. On receiving update, the parameters (IP) are updated. On receiving delete, the session is cleared.

Message 12 (SendMappingDetails) is sent from SACP module to the DPI-UPF module and provides session state and parameters (Create/Update/Delete with other attributes SUPI, IP). If configured by the operator, additional attributes for the subscriber's session can be queried from UDM and provided to the DPR-UPF module. It will be understood that the information may be collected and sent together or may be sent when each individual data is received.

Section 4 of figure 6 provides for an example of a query for Slice data from the BSF. This may be desirable if the Subscription to SMF in Section 2 is not done on a per slice basis and parameters is intended to be queried. Message 13, (Nbsf_Management_Discovery) is sent with subscribers SUPI, IPAddress to the BSF and Message (Nbsf_Management_Discovery_Response) contains the details about the subscriber, which includes Slice information. This information may then be communicated to the DPI-UPF module. It will be understood that the information may be collected and sent together or may be sent when each bit of data is received.

Figure 7 provides for the optional aspect of determining the location of a subscriber in section 5. The SACP module is configured to register with the AMF if location information is required. First, SACP module is configured to determine which AMF in the network is handling subscribers session. The SACP module may query the UDM for the SUPI using Message 15 (Nudm_SDM_Get). On getting a reply shown as message 16 (NudmResponse), the system is configured to store the information.

Then SACP module is configured to subscribe to the associated AMF using message 18 (Namf_EventExposure_Subscribe) with immediateFlag parameter set to true. Including this parameter is intended to further request the current value of location from the AMF. The AMF is configured to reply in Message 19 (Namf_EventExposure_Notify). On getting the current value of location, the SACP module may store the location and may inform DPI-UPF module in message 21 (SendMappingDetails)

Section 6 of Figure 7 provides for the system handling of updates from the NRF according to an embodiment. Since updates were subscribed to by the system, an update will be received when NRF detects a change in an NF information. Message 22 illustrates if a new SMF is received. This is similar as discovering an SMF for the first time and subscribing to it and therefore Messages 8 and 9 may be used.

Message 23 illustrates an update to an SMF or a new/updated AMF/UDM/BSF or the like. The SACP may store and update the information received. Message 25 indicates a deletion of NFs and on receiving this message; the information stored about the NF (such as SMF, AMF, BSF) is removed from the system.

Section 7 of Figure 7 provides for Location updates from the AMF if the system has been configured to provide these updates. If the AMF detects a change in Subscriber location the AMF sends Msg27 (Namf_EventExposure_Notify) with the new location associated with the SUPI to the system. The processing of the messages is intended to be similar to Action 20 and Message 21 as noted above.

Section 8 of Figure 7 provides for an optional method of a lookup for attributes. The DPI-UPF module notes an unknown IP address and communicates this to the SACP module at message 28. At message 29, the SACP module is configured to query with this IP address to determine an appropriate lookup and at message 30 and the system may then query the appropriate SMF for any further subscriber information.

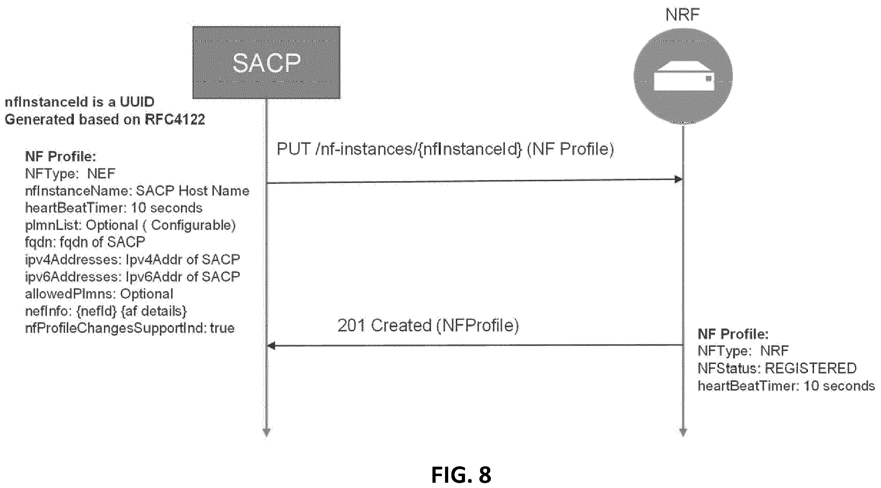

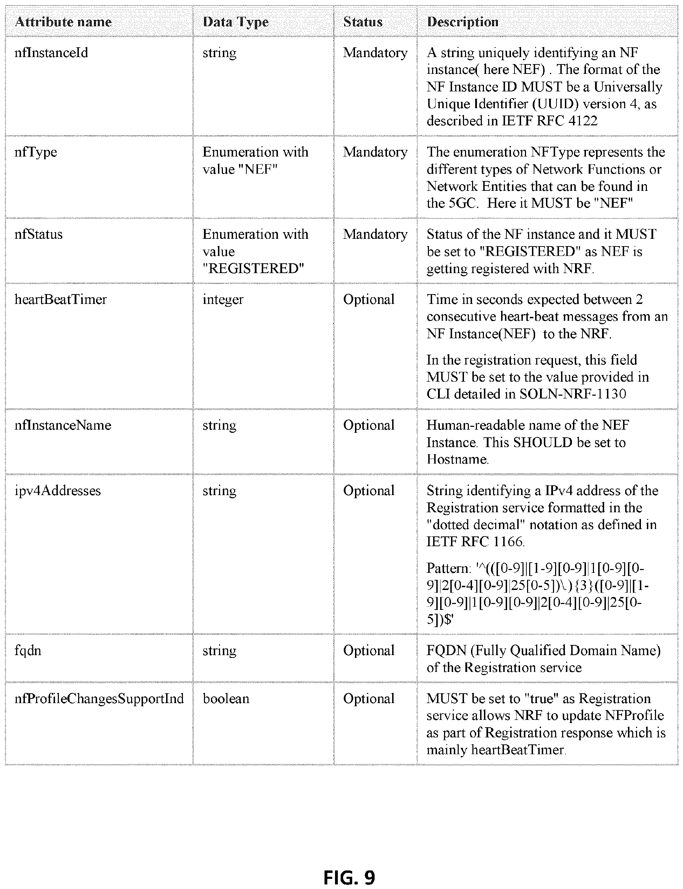

Figure 8 illustrates a specific example of initial registration with an NRF by the system, in particular, using an Nnrf_NFManagement_NFRegister message. This type of message may be used for registering as an NEF, AF or both. The details in figure 8 and the table in figure 9 relate to an NEF but are intended to apply as well for the AF. In this speicifc example, there may be an API URI: {apiRoot}/nnrf-nfm/v1/nf-instances/{nfInstanceID} (NFProfile) where {nfInstanceID} corresponds to UUID generated based on known standards. Figure 9 illustrates various parameters and their associated data type, status and description. In some cases, more of less parameters may be used. nflnstanceld, nfType and nfStatus are fields generally intended to be sent from SACP to NRF. In addition, the NRF may be informed about list of allowed Network Function types, allowed Nf domains, allowed SNSSAIS, which can reach the NF consumer services. The nefinfo for the SACP may not be sent to the NRF as SACP is not intended to expose any NEF services.

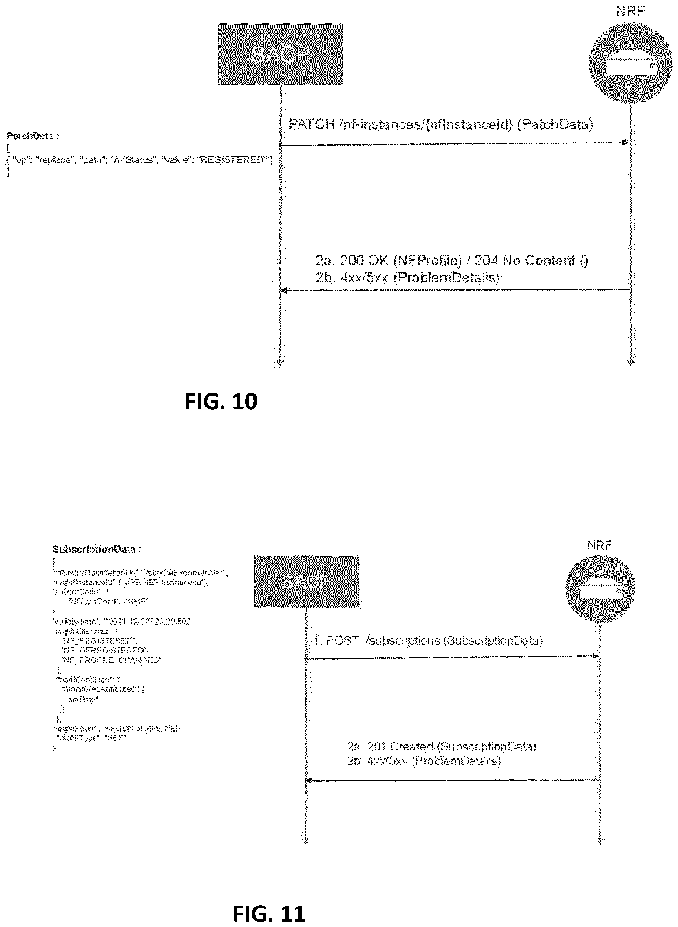

Once the system is registered with the NRF, it may periodically contact the NRF to provide updates with respect to the systems operating status. In some cases, the message that may be sent may be Nnrf_NFManagement_NFUpdate. The system is intended to periodically contact the NRF on heartbeat timer expiry by invoking, for example, the NFUpdate service operation, in order to show that the SACP is still operational as shown in figure 10. In this specific example, the message may be API: PATCH .../nf-instances/{nfInstanceID} (PatchData) wherein, in the PatchData, nfStatus may be set with "REGISTERED" to illustrate the system is still operational andnflnstanceld may be set to UUID. For example
PATCH....../nf-instances/4947a69a-f61b-4bc1-b9da-47c9c5d14b64 Content-Type: application/json-patch+json

Figure 11 provides a specific example with respect to a subscription to topology changes in the NRF. The system may send, for example, a message such as: Nnrf_NFManagement_NFStatusSubscribe. On successful registration as NEF by the system, the Registration service may subscribe to primary NRF for SMF/AMF additions/deletions in the network. The following API may be used twice, once for SMF and once for AMF, if location movements are desired to be reviewed by the system. In cases where the SACP module may be interacting with the UDM and/or BSF, then subscribing for UDM and/or BSF updates is needed as well using a similar API.
Resource URI: {apiRoot}/nnrf-nfm/v1/subscriptions Method: POST

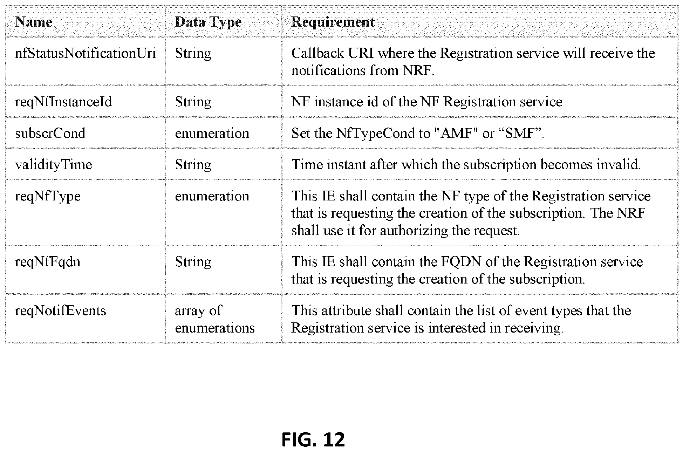

The request body may include the input parameters for the subscription. These parameters include, for example: Target NF type, Callback URI of the Requester NF, and the like. Figure 12 is a table showing further parameters that may be included in a request.

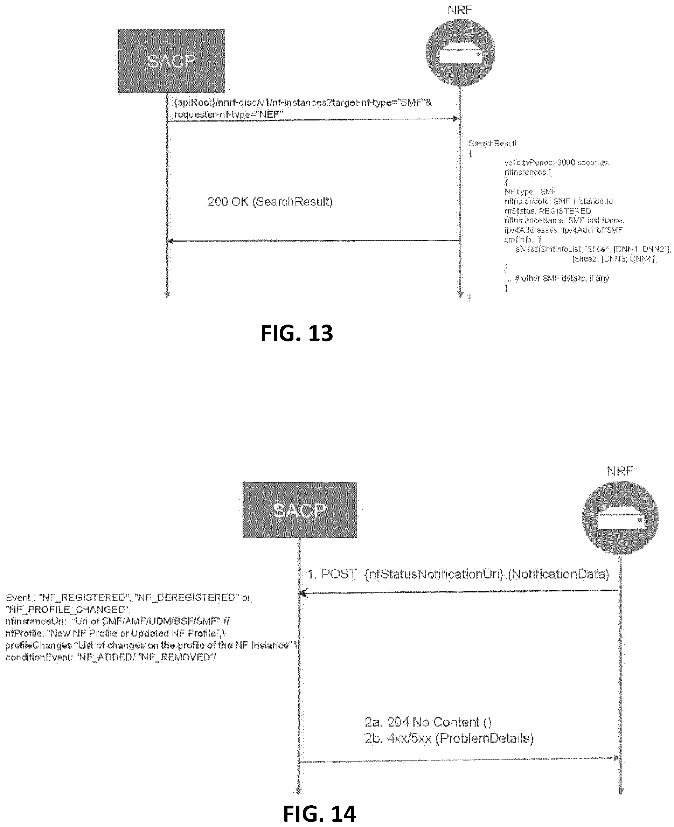

Figure 13 illustrates an example of NF discovery by an embodiment of the system, for example using message: Nnrf_NFDiscovery. Discovering the current topology may be used where the network functions like SMF, AMF, UDM, BSF are to be discovered for the subscriber awareness which include subscriber, location profile and the like. In some cases, the system may invoke GET API with URI {apiRoot}/nnrf-disc/v1/nf-instances?<query parameters>, where the query parameters determine the filter criteria for discovery.

The table below provides example query parameters that may be included in the request:

| **Name** | **Data Type** | **Requirement** |
|---|---|---|
| target-nftype | enumeration | This IE contain the NF type of the NF Service Producer being discovered. |
| requester - nf-type | enumeration | This IE contains the NF type of the NF Service Consumer that is invoking the Nnrf_NFDiscovery service. In this case SACP's NFTYpe is included. |

In order to discover all SMF's in the network, the system may sue the following: GET API with URI {apiRoot}/nnrf-disc/v1/nf-instances?target-nftype="SMF"&requester-nf-type="NEF". Similarly, other NFs like AMF, UDM, and BSF along with the NFProfiles are discovered from the SACP module.

Figure 14 provides a specific example of receiving notifications from the NRF, and in particular via the message Nnrf_NFManagement_Notify. On processing the notifications, the Registration service is configured to inform other modules about the changes or updates so that these modules can take appropriate actions. In a particular example, if an SMF is added, then registration may be done for the SMF.

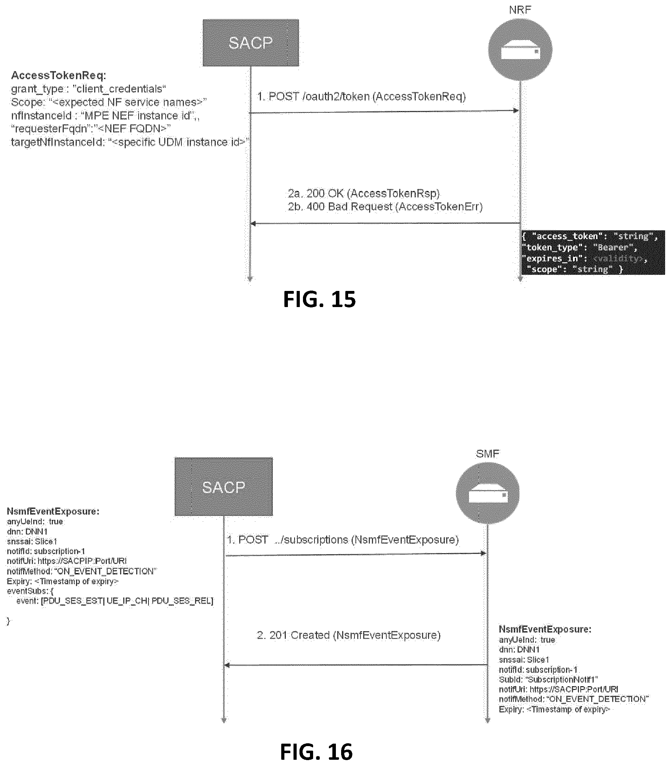

Figure 15 illustrates a specific example of requesting and receiving Access Tokens for the system. On successful SMF/AMF/UDM discovery or when SMF's/AMF's/UDM's are added, the system is configured to request and/or receive the access-tokens for all the SMF NF instances where OAuth2Required field of NFProfile (of SMF/AMF/UDM/BSF) => NFService is set to "true" or "not set to any value" using the Access Token Request on NRF. In some cases, the request POST {nrfApiRoot}/oauth2/token (AccessTokenReq) may be used. The OAuth 2.0 Access Token Request includes in the body of the HTTP POST request and may include the following:
- An OAuth2 grant type set to, for example, "client_credentials";
- The "scope" parameter indicating the names of the NF Services that the NF Service Consumer is trying to access (for example, the expected NF service names; For the SMF following services may be considered: Nsmf_EventExposure
- The NF Instance Id of the SACP module requesting the OAuth2.0 access token; and
- The NF Instance Id of the SMF instance for whom the access token is requested.

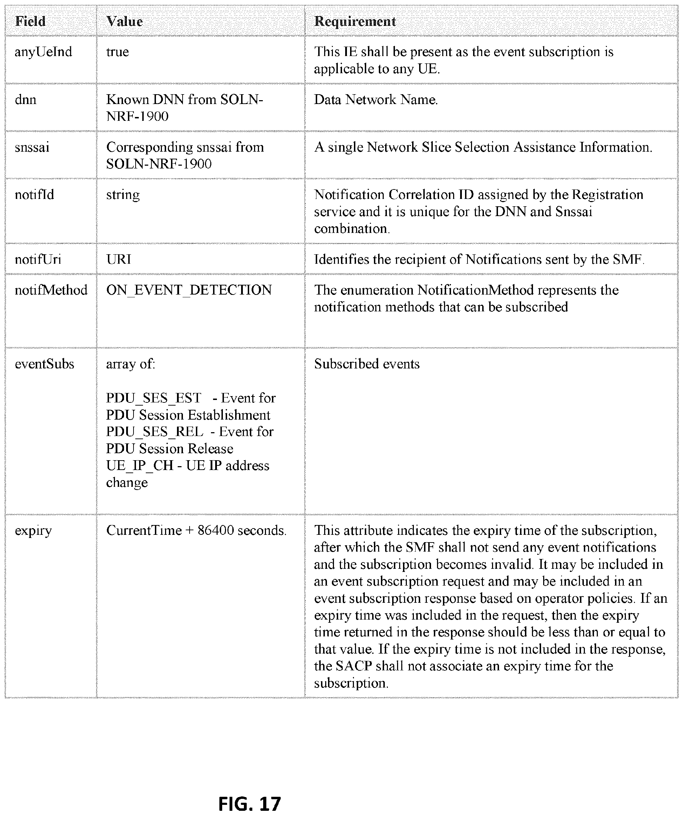

Figure 16 is configured to provide an example of SMF Event Subscription, via for example a message: Nsmf_EventExposure_Subscribe. Figure 17 illustrates example fields and values with respect to the fields in the message of NsmfEventExposure.

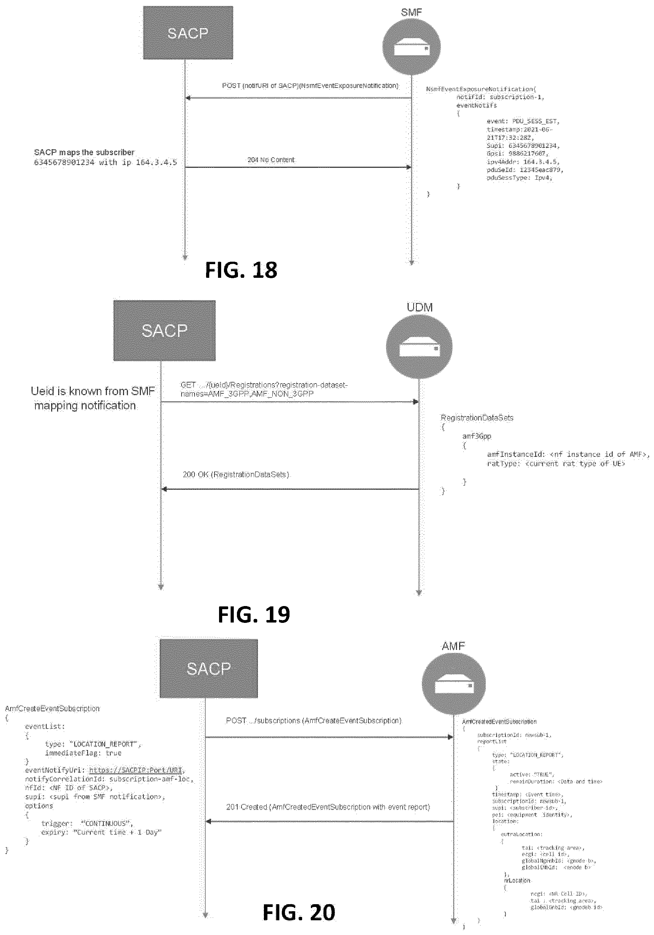

Figure 18 provides a specific example of Mapping/Unmapping notifications from the SMF to the system, for example via the message: Nsmf_EventExposure_Notify. This is intended to provide the SUPI to IPAddress(es) mapping to the SACP module. Notifications from the SMF may include the following table details, which is intended to aid in subscriber mapping.

| **Field** | **Requirement** |
|---|---|
| event | This identifies the type of event like Session mapping or update or unmapping. |
| timestamp | Indicates the timestamp when the event happened on SMF. Helps SACP to handle the delayed updates. |
| supi | Subscriber unique identifier |
| gpsi | Subscriber identifier like MSISDN |
| Ipv4Addr | IPv4 address of the subscriber |
| Ipv6Addrs | Ipv6 address of the subscriber |
| Ipv6Prefix | Ipv6 prefix of the subscriber |
| pduSessType | Indicates the PDU type like IPv4 , IPv6 , IPv4v6( dual stack) |
| pduSeId | PDU session id uniquely identifying the PDU session on SMF. |

Figures 19 and 20 illustrate a specific example of a subscription to an AMF by the system, using, for example, the message: Namf_EventExposure_Subscribe and the message to query from UDM: Nudm_SDM_Get. The AMF is configured to provide the service APIs to query or subscribe for the location details and PEI (permanent equipment identity). In order to receive these details, SACP module may subscribe to the AMF. In this example, the subscription may be a two phased approach. On receiving the mapping notification from SMF, the SACP module may query the UDM to determine the serving AMF for the SUPI/GPSI. As shown in figure 19. On Receiving the AMF detail, the SACP module may subscribe to the AMF and at the same time query for the current location of the subscriber of interest, as shown in figure 20. In this example, the SACP module is subscribing for continuous reports for a period of time, for example a day or the like. On the end of the period, the SACP may update the registration for a further period to continue to receive location updates. The SACP module may also query the current location and PEI.

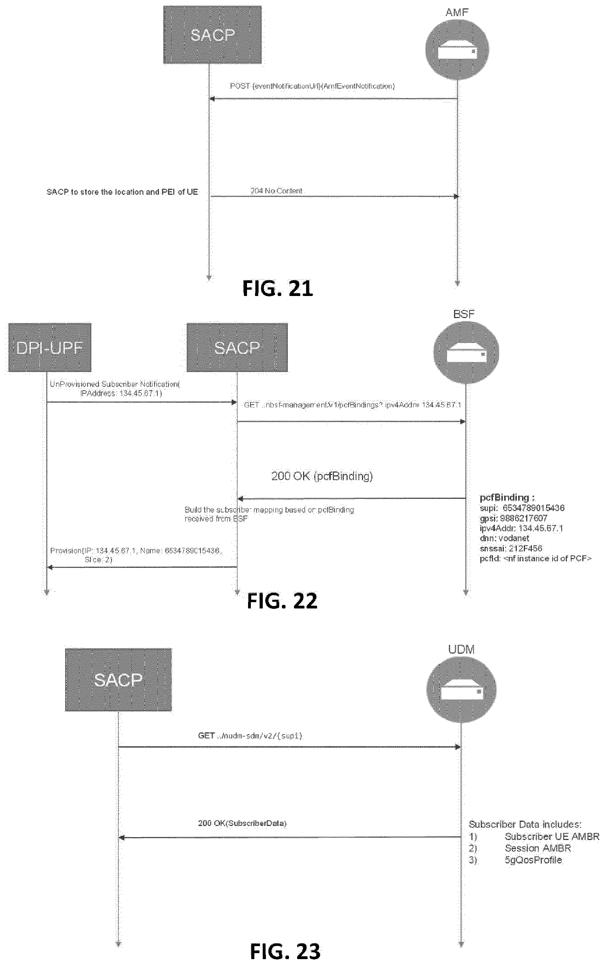

Figure 21 illustrates a specific example of the system receiving a notification from the AMF, via for example, an Namf_EventExposure_Notify message. In this example, at least one location report may be generated by the AMF as and when location updates are determined at AMF. In some cases, the following location details may be available: tracking area identity, E-UTRA Cell identity, 5G NR Cell identity, ENodedID, GNodebID and the like. In some cases, the PEI may also be available and sent from the AMF to the system.

Figure 22 illustrates a BSF Lookup via a message: Nbsf_Management_Discovery. Binding support function (BSF) is configured to maintain the PDU session binding information and allows consumers like NEF to retrieve the binding information over service based interfaces. The BSF may retrieve the binding information provisioned from the Policy Control Function (PCF) where it registers binding information in the BSF for a UE when an IPv4 address and/or IPv6 prefix is allocated, or a MAC address is used for the PDU session. Further, the PCF may update binding information in the BSF when a UE address information is changed for the PDU Session. The PCF may also remove binding information in the BSF when an IPv4 address and/or IPv6 prefix is released, or a MAC address is no longer used for the PDU Session.

The SACP module, when registered as an NEF, can query the binding information in order to retrieve the subscriber mapping details. When data traffic is seen for an IPAddress, by the DPI-UPF module, where the traffic is not associated with any subscriber. The DPI-UPF module may inform the SACP module. The SACP can be configured to query the binding information from BSF and map the subscriber. In addition, SACP can query the BSF to get additional session details for example: SNSSAI, DNN, PCF identity, and the like. In case the slice details are not available from an SMF notifications then the SACP may also perform a BSF to determine slice awareness.

The following table provides details on parameters that are available from pcfBinding, which are relevant for SACP and can be used to build subscriber awareness. The pcfBinding is queried from BSF on seeing data traffic for an IPaddress(v4 or v6) which does not have any association with any subscriber. On receiving the pcfBinding containing the Ipaddress, SUPI, GPSI, DNN, Snssai, pcfid, or the like, the SACP can build the subscriber mapping as the mapping between the ipaddress and subscriber identity (SUPI, GPSI) are available and in addition slice awareness may also be built from pcfBinding.

| **Parameter** | **Description** |
|---|---|
| supi | Subscriber identifier |
| gpsi | Public identifier such as a MSISDN or an External Identifier. |
| dnn | DNN of the subscriber session |
| snssai | Slice identification |
| pcfld | Serving PCF instance identifier |

Figures 23 to 26 provide specific examples of UDM Subscribe / Lookup / Notifications, via for example: Message (Lookup) : Nudm_SDM_Get; Message (Subscribe) : Nudm_SDM_Subscribe and Message (Notifications): Nudm_SDM_Notification.

It will be understood that the Unified data management (UDM) manages the subscriber data and provides notifications, which enables the SACP module to understand the network behavior of a particular UE. The SACP module may query for example, Subscriber UE AMBR, Session AMBR, 5gQosProfile, Identifier translation to/from GPSI from/to SUPI, as shown in figure 23.

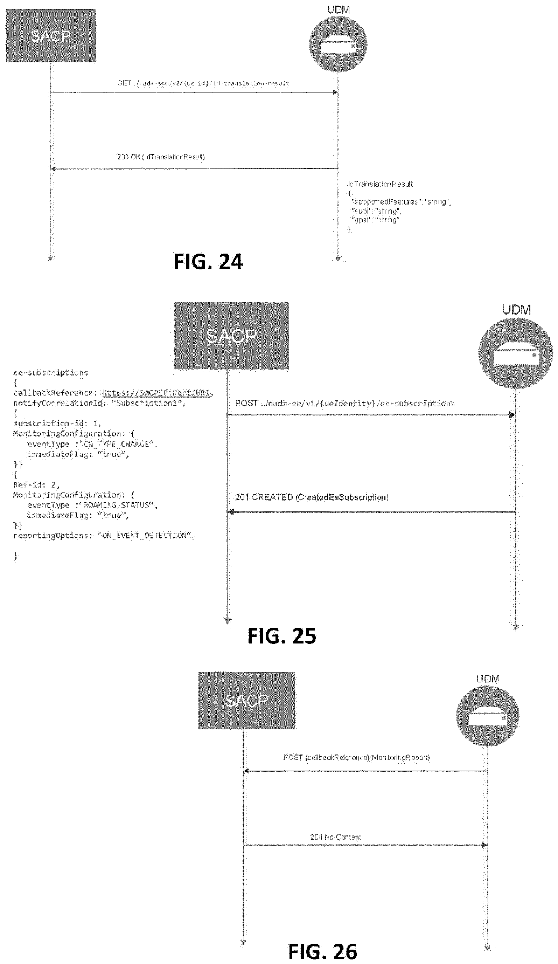

For identifier translation, as shown in figure 24, SACP module can use this query to get the identifier translation done. Enforcements or analytics may be completed based on the translation identifier.

In addition, SACP module can subscribe to UDM for few events for example: Core network type change event, which may be helpful for handover identifications on SACP, roaming status event indicating whether subscriber is roaming or not which enables SACP to perform enforcements and the like as shown in figure 25. In the notifications, UE Identity can be either SUPI or GPSI.

Figure 26 illustrates an example of receiving a notification from the UDM to the SACP module. On receiving the CN_TYPE_CHANGE event from UDM, this enables SACP for handover detection and may also allow for the SACP to perform enforcements when the handover is confirmed between 4G to 5G or vice versa. This notification may be beneficial for session continuity on SACP between 4G mapping session and 5G mapping session.

In the preceding description, for purposes of explanation, numerous details are set forth in order to provide a thorough understanding of the embodiments. However, it will be apparent to one skilled in the art that these specific details may not be required. It will also be understood that aspects of each embodiment may be used with other embodiments even if not specifically described therein. Further, some embodiments may include aspects that are not required for their operation but may be preferred in certain applications. In other instances, well-known structures may be shown in block diagram form in order not to obscure the understanding. For example, specific details are not provided as to whether the embodiments described herein are implemented as a software routine, hardware circuit, firmware, or a combination thereof.

Embodiments of the disclosure or elements thereof can be represented as a computer program product stored in a machine-readable medium (also referred to as a computer-readable medium, a processor-readable medium, or a computer usable medium having a computer-readable program code embodied therein). The machine-readable medium can be any suitable tangible, non-transitory medium, including magnetic, optical, or electrical storage medium including a diskette, compact disk read only memory (CD-ROM), memory device (volatile or non-volatile), or similar storage mechanism. The machine-readable medium can contain various sets of instructions, code sequences, configuration information, or other data, which, when executed, cause a processor to perform steps in a method according to an embodiment of the disclosure. Those of ordinary skill in the art will appreciate that other instructions and operations necessary to implement the described implementations can also be stored on the machine-readable medium. The instructions stored on the machine-readable medium can be executed by a processor or other suitable processing device, and can interface with other modules and elements, including circuitry or the like, to perform the described tasks.

The above-described embodiments are intended to be examples only. Alterations, modifications and variations can be effected to the particular embodiments by those of skill in the art without departing from the scope, which is defined solely by the claim appended hereto.

## Claims

1. A system for subscriber awareness for traffic flows in a computer network, the system comprising:
a Subscriber Awareness Control Plane (SACP) module configured to register as a network node and subscribe to at least one network function on the network;
at least one processing module configured to request and receive information of traffic flow parameters and subscriber parameters for the traffic flows from the at least one network function; and
a subscriber awareness module configured to map subscribers to traffic flows, based on the received traffic flow parameters and subscriber parameters.

2. The system of claim 1 wherein the SACP module is further configured to provide traffic management actions based on the mapped subscriber to the traffic flow.

3. The system of claim 2 wherein the traffic management action comprises instructions to another network node to implement the traffic action.

4. The system of claim 1 wherein the SACP module comprises an AMF Event Subscription and Processing module configured to determine all network subscriber location updates.

5. The system of claim 4 wherein the AMF event subscription and processing module is further configured to determine location updates for active subscribers.

6. The system of claim 1 wherein the SACP module comprises a UDM event subscription and Query Processing module configured to determine updates related to the subscriber parameters.

7. The system of claim 1 wherein the SACP module comprises a Radius Subscriber mapping module configured to retrieve Radius mapping events associated with the subscriber on the network.

8. The system of claim 1 wherein the SACP module comprises an NRF registration and topology module configured to configured to discover at least one other network function in the network and track the interactions of the at least one other network function with the subscriber's traffic flows.

9. The system of claim 1 wherein the SACP module further comprises an SMF event subscription and processing module configured to receive events on session creates, session updates and deleted sessions related to the subscriber and for processing these received events to determine any changes to the subscriber mapping.

10. A method for subscriber awareness for traffic flows in a computer network, the system comprising:
registering a Subscriber Awareness Control Plane (SACP) module as a network node;
subscribing to at least one network functions on the network monitoring traffic flows;
receiving information of traffic flow parameters and subscriber parameters for the traffic flows from at least one network function; and
mapping subscribers to traffic flows, based on the traffic flow parameters and subscriber parameters.

11. The method of claim 10 further comprising providing traffic management actions based on the mapped subscriber to the traffic flow.

12. The method of claim 11 wherein the traffic management action comprises instructions to another network node to implement the traffic action.

13. The method of claim 10 further comprising: determining all network subscriber location updates.

14. The method of claim 10 further comprising:
discovering at least one other network function in the network; and
tracking the interactions of the at least one other network function with the subscriber's traffic flows.

15. The method of claim 10 further comprising:
receiving events on session creates, session updates and deleted sessions related to the subscriber; and
processing these received events to determine any changes to the subscriber mapping.
